# EUROPÄISCHE PATENTSCHRIFT

(11) **EP 1 724 078 B1**
(45) Veröffentlichungstag und Bekanntmachung des Hinweises auf die Patenterteilung: **25.12.2013**
(21) Anmeldenummer: 06001594.8
(22) Anmeldetag: 26.01.2006
(51) Int. Cl.: B27B 31/00, B23D 47/04, B65H 3/24

(54) **Vorrichtung zum Abschieben mindestens eines Teilstapels mit mindestens einem plattenförmigen Werkstück von einem Reststapel**
Device for pushing at least one sub-stack with at least one plate-shaped workpiece from a remaining stack
Dispositif pour pousser une section de pile avec au moins une pièce en forme de plaque d'une pile restante

(30) Priorität: 29.04.2005 DE 102005020979
(43) Veröffentlichungstag der Anmeldung: 22.11.2006
(73) Patentinhaber: HOLZMA Plattenaufteiltechnik GmbH, 75365 Calw-Holzbronn (DE)
(72) Erfinder: Hartmann, Gerhard, 72224 Ebhausen-Rotfelden (DE); Weisser, Stefan, 72218 Wildberg (DE)
(74) Vertreter: Dreiss

(56) Entgegenhaltungen:
- EP-A- 1 052 204
- EP-A1- 0 379 019
- DE-A1- 4 100 458
- DE-C1- 4 222 813
- US-A- 4 796 500
- PATENT ABSTRACTS OF JAPAN Bd. 1995, Nr. 07, 31. August 1995 (1995-08-31) -& JP 07 109043 A (TOSHIBA SEIKI KK), 25. April 1995 (1995-04-25)

## Beschreibung

### Stand der Technik

Die Erfindung betrifft eine Vorrichtung zum Abschieben mindestens eines Teilstapels mit mindestens einem plattenförmigen Werkstück von einem Reststapel entsprechend dem Oberbegriff des Anspruchs 1. Gegenstand der Erfindung ist auch ein Verfahren zum Betreiben einer solchen Vorrichtung. Eine solche Vorrichtung und ein solches Verfahren sind der DE 42 22 813 C1 zu entnehmen.

Eine andere Vorrichtung ist aus der DE 44 33 830 A1 bekannt. Sie dient zur Beschickung einer Plattenaufteilsäge, mit der Teilstapel, die aus mehreren großformatigen Platten gebildet sind, zersägt werden.

Hierzu ist auf einem Hubtisch ein vorratsstapel plattenförmiger Werkstücke abgelegt. Zwischen Hubtisch und einem zur Säge führenden Fördertisch ist eine stationäre Gegenhalteeinrichtung angeordnet, deren Oberseite in der Ebene des Fördertischs liegt. Aus der Dicke eines Werkstücks und der Anzahl der abzuschiebenden Werkstücke wird die Höhe des entsprechenden Teilstapels bestimmt. Mittels einer Abschiebeeinrichtung, beispielsweise in Form eines separaten Schiebers, wird der Teilstapel vom Reststapel in Richtung Fördertisch abgeschoben. Der Reststapel wird dabei von der Gegenhalteeinrichtung zurückgehalten.

Des weiteren wird in der US 4,796,500 eine Ausrückvorrichtung für Holzplatten beschrieben. Die DE 41 00 458 offenbart eine Plattenzuführvorrichtung für Plattenaufteilsägen.

Aufgabe der vorliegenden Erfindung ist es, eine Vorrichtung der eingangs genannten Art so weiterzubilden, dass sie möglichst preiswert baut und gleichzeitig das Abschieben einer gewünschten Anzahl plattenförmiger Werkstücke mit hoher Präzision ermöglicht.

Diese Aufgabe wird durch eine Vorrichtung mit den Merkmalen des Anspruchs 1 und ein Verfahren mit den Merkmalen des Anspruchs 10 gelöst. Vorteilhafte Ausgestaltungen finden sich in untergeordneten Ansprüchen.

### Vorteile der Erfindung

Bei der erfindungsgemäßen Vorrichtung kann auf eine separate Abschiebeeinrichtung verzichtet werden. Statt dessen werden die für die Förderung des Teilstapels, der aus mindestens einem Werkstück besteht, ohnehin erforderlichen Spannzangen, und dort wiederum der untere Finger, zum Abschieben des Teilstapels vom Reststapel eingesetzt. Durch den Verzicht auf eine separate und spezifische Abschiebeeinrichtung werden Material-, Herstell- und Montagekosten gespart, so dass die Vorrichtung insgesamt preiswert ist.

Um Beschädigungen an dem abzuschiebenden Teilstapel zu vermeiden, sollte das den unteren Finger umfassende Abschiebeelement möglichst flächig am Teilstapel bzw. mindestens am untersten Werkstück des abzuschiebenden Teilstapels angreifen. Hierzu können auch alle Finger einer Spannzange verwendet werden, wenn sie gleich lang sind. Eine Beschädigung der Oberseite der obersten Platte des Reststapels wird ferner zuverlässig vermieden, wenn die untere Seite des unteren Fingers der zur Abschiebeeinrichtung gehörenden Spannzange von der Oberseite dieses Reststapels etwas beabstandet ist und/oder eine Rolle aufweist. Vorteilhafterweise beträgt der Abstand etwa eine halbe Werkstückdicke.

Außerdem können die Finger mehrerer Spannzangen beim Abschiebevorgang am abzuschiebenden Teilstapel angreifen, und dabei können beispielsweise die in der Mitte liegenden Finger an den untersten Platten des abzuschiebenden Teilstapels, die weiter außen liegenden Finger jedoch beispielsweise auf halber Höhe des abzuschiebenden Teilstapels angreifen. Damit liegen die Angriffsflächen der Spanzangen auf unterschiedlichen Höhen, und die auf die Werkstücke während des Abschiebens von einem Finger ausgeübte Kraft wird reduziert, was wiederum das Risiko von Beschädigungen vermindert. Dieses Prinzip kann analog auch bei der Gegenhalteeinrichtung angewendet werden.

Die Verwendung einer Höhenmesseinrichtung gestattet es, dass der abgeschobene Teilstapel möglichst präzise eine gewünschte Anzahl von Werkstücken aufweist. Diese Genauigkeit wird wesentlich erhöht, indem die Höhenmesseinrichtung möglichst nahe bei der Abschiebeeinrichtung, also beispielsweise unmittelbar neben einer Spannzange oder zwischen zwei Spannzangen, die zur Abschiebeeinrichtung gehören, angeordnet ist.

Ein verschwenk- und verriegelbarer Messarm einer solchen Höhenmesseinrichtung ist kostengünstig realisierbar, aber auch ein verschieb- oder ausfahrbarer Messarm ist denkbar. Wenn die Messeinrichtung in der Arbeitsstellung auf die Oberseite des obersten Werkstücks, vorzugsweise im Mittelbereich, mit einer bestimmten Kraft drückt, werden Welligkeiten des abzuschiebenden Teilstapels verringert, was dazu führt, dass der abgeschobene Teilstapel mit nochmals höherer Genauigkeit die gewünschte Anzahl von Werkstücken enthält.

### Zeichnung

Nachfolgend wird ein besonders bevorzugtes Ausführungsbeispiel der vorliegenden Erfindung unter Bezugnahme auf die beiliegende Zeichnung näher erläutert. In der Zeichnung zeigen:
- Figur 1: eine schematische Seitenansicht einer Vorrichtung zum Abschieben mindestens eines Teilstapels von einem Reststapel;
- Figuren 2 bis 8: eine perspektivische Darstellung der Vorrichtung von Figur 1 zu verschiedenen Zeitpunkten während eines Abschiebevorganges.

### Beschreibung des Ausführungsbeispiels

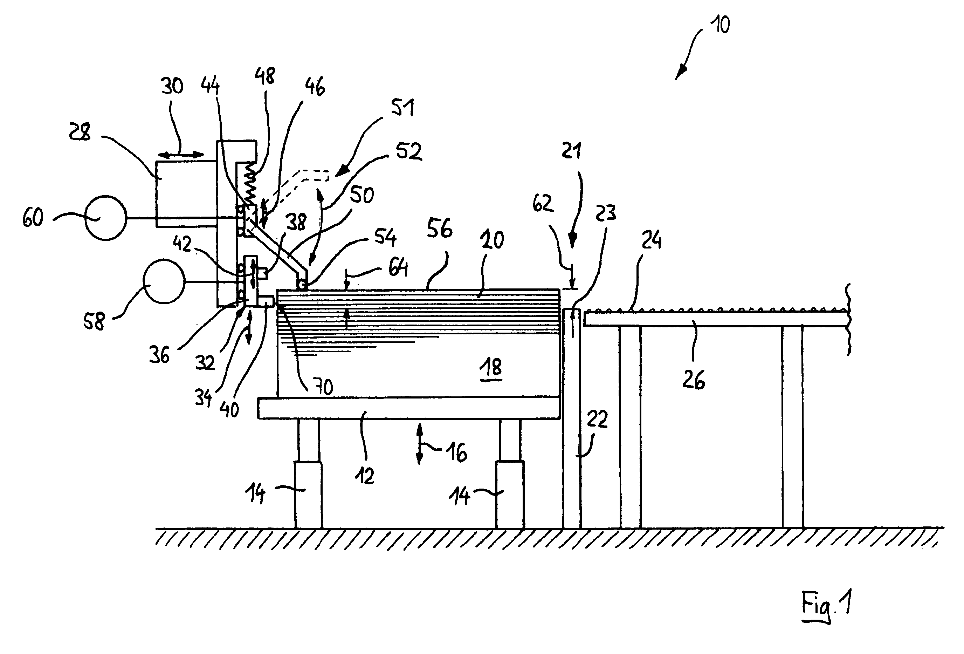

Eine Vorrichtung zum Abschieben mindestens eines plattenförmigen Werkstücks von einem Reststapel trägt in Figur 1 insgesamt das Bezugszeichen 10. Sie umfasst einen Hubtisch 12, der bei dem vorliegenden Ausführungsbeispiel auf Hydraulikstützen 14 gelagert ist, über die er in der Höhe verstellt werden kann (Pfeile 16 in Figur 1). Auf dem Hubtisch 12 ist ein Stapel 18 mit einer Vielzahl plattenförmiger Werkstücke 20 abgelegt.

In Figur 1 rechts vom Hubtisch 12 umfasst die Vorrichtung 10 eine Gegenhalteeinrichtung 21 mit Gegenhaltern 22. Deren Oberseite 23 ist in etwa auf der Höhe von Rollen 24 eines stationären Fördertisches 26. Der Fördertisch 26 führt zu einer in Figur 1 nicht dargestellten Sägeeinrichtung.

In Figur 1 links vom Hubtisch 12 ist ein Programmschieberwagen 28 angeordnet, der sich senkrecht zur Zeichnungsebene von Figur 1 erstreckt und in horizontaler Richtung programmgesteuert bewegt werden kann (Pfeile 30). Am Programmschieberwagen 28 sind eine Mehrzahl von Spannzangen 32 befestigt, von denen in Figur 1 jedoch nur eine sichtbar ist. Die anderen Spannzangen befinden sich oberhalb und unterhalb der Zeichnungsebene von Figur 1. Jede Spannzange 32 verfügt über ein eigenes Hubelement (nicht dargestellt), mit dem die Spannzange 32 relativ zum Programmschieberwagen 28 in der Höhe verstellt werden kann (Pfeile 34). Jede Spannzange 32 verfügt über einen Basiskörper 36 und einen von diesem abragenden oberen Finger 38 und einen unteren Finger 40. Der obere Finger 38 ist dabei etwas kürzer als der untere Finger 40. Sein Abstand zum unteren Finger 40 ist darüber hinaus einstellbar (Pfeile 42).

Am Programmschieberwagen 28 ist ferner ein Schlitten 44 vertikal verschieblich angebracht (Pfeile 46). Neben der Gewichtskraft wird der Schlitten 44 auch noch durch eine Feder 48, die sich am Programmschieberwagen 28 abstützt, nach unten gedrückt. Am Schlitten 44 ist ein Messarm 50 befestigt. Der Schlitten 44 und der Messarm 50 bilden insgesamt eine Höhenmesseinrichtung 51. Der Messarm 50 kann von einer in Figur 1 gestrichelt dargestellten Ruheposition um eine senkrecht zur Zeichnungsebene von Figur 1 liegende Schwenkachse in eine Messposition verschwenkt werden (Pfeil 52), in der ein Tastbereich 54 am abragenden Ende des Messarms 50 auf der Oberseite 56 des obersten Werkstücks 20 aufliegt. Der Tastbereich 54 wird dabei durch eine Rolle gebildet. In der Messposition kann die Winkellage des Messarms 50 gegenüber dem Schlitten 44 verriegelt werden.

Die Relativposition des Basiskörpers 36 einer Spannzange 32 gegenüber dem Programmschieberwagen 28 wird von einem Sensor 58 erfasst. Ebenso wird die Relativposition des Schlittens 44 gegenüber dem Programmschieberwagen 28 von einem Sensor 60 erfasst. Beide Sensoren 58 und 60 liefern entsprechende Signale an eine in Figur 1 nicht gezeigte Steuer- und Regeleinrichtung, welche den Betrieb der Vorrichtung 10 und insgesamt der Säge steuert bzw. regelt.

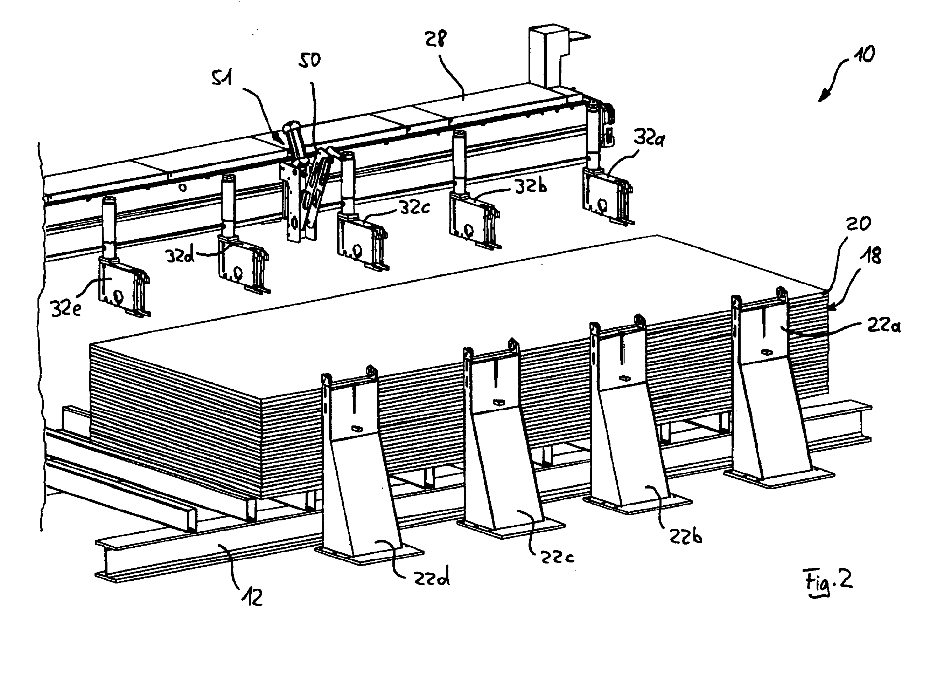

Die Funktionsweise der Vorrichtung 10 wird nun im Detail unter Bezugnahme auf die Figuren 2 bis 8 erläutert. Dabei erkennt man aus diesen perspektivischen Darstellungen, dass die Vorrichtung 10 insgesamt sechs Spannzangen 32 aufweist, welche von rechts nach links durch die Indizes a bis f gekennzeichnet sind. Ferner erkennt man, dass die Gegenhalteeinrichtung 21 durch insgesamt vier einzelne Gegenhalter 22 gebildet wird, welche von rechts nach links ebenfalls die Indizes a bis d tragen.

In der in Figur 2 dargestellten Ausgangslage ist der Hubtisch 12 mit dem Stapel 18 plattenförmiger Werkstücke 20 abgesenkt. Der Messarm 50 der Höhenmesseinrichtung 51, die mittig zwischen den Spannzangen 32c und 32d angeordnet ist, ist in seine Ruheposition nach oben geschwenkt. Die Spannzangen 32 sind alle in der gleichen vertikalen Position. Der Programmschieberwagen 28 ist so eingestellt, dass sich die Spannzangen 32, in Förderrichtung gesehen, hinter dem Stapel 18 befinden.

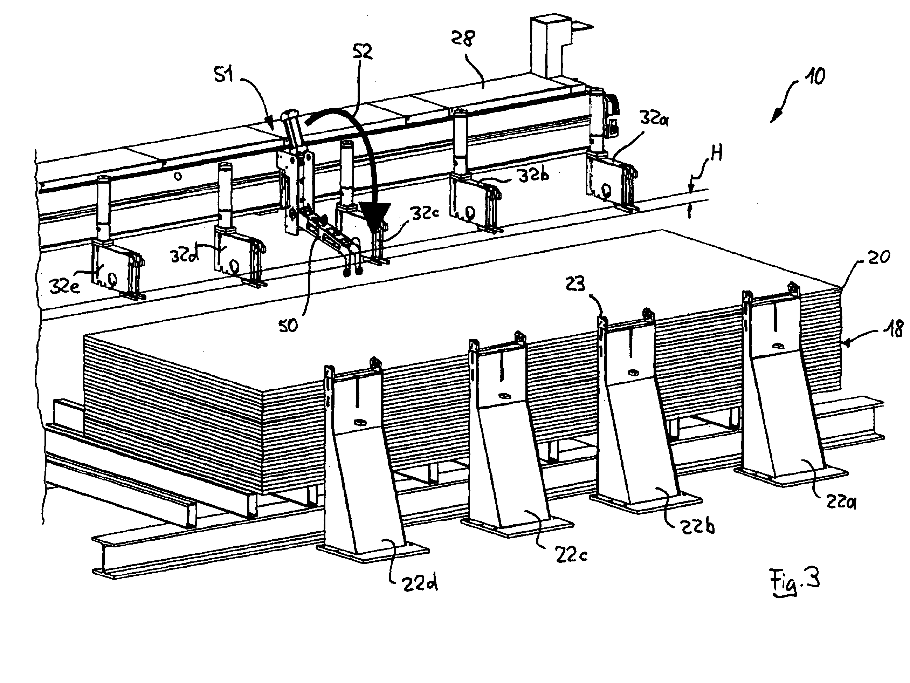

Wie aus Figur 3 ersichtlich ist, wird nun der Messarm 50 entsprechend dem Pfeil 52 in seine Arbeitsposition geschwenkt. Gleichzeitig werden die zur Höhenmesseinrichtung 51 nächstliegenden beiden Spannzangen 32c und 32d auf eine Höhe angehoben, die vorliegend um eine halbe Dicke eines plattenförmigen Werkstücks 20 oberhalb der Oberseite 23 der mittleren Gegenhalter 22b und 22c liegt (die äußeren Gegenhalter 22a und 22d sind gegenüber den mittleren Gegenhaltern 22b und 22c ganz leicht abgesenkt). Die restlichen Spannzangen 32a, b, e und f (letztere in Figur 3 nicht sichtbar) sind um einen Abstand H gegenüber den Spannzangen 32c und 32d höher angeordnet.

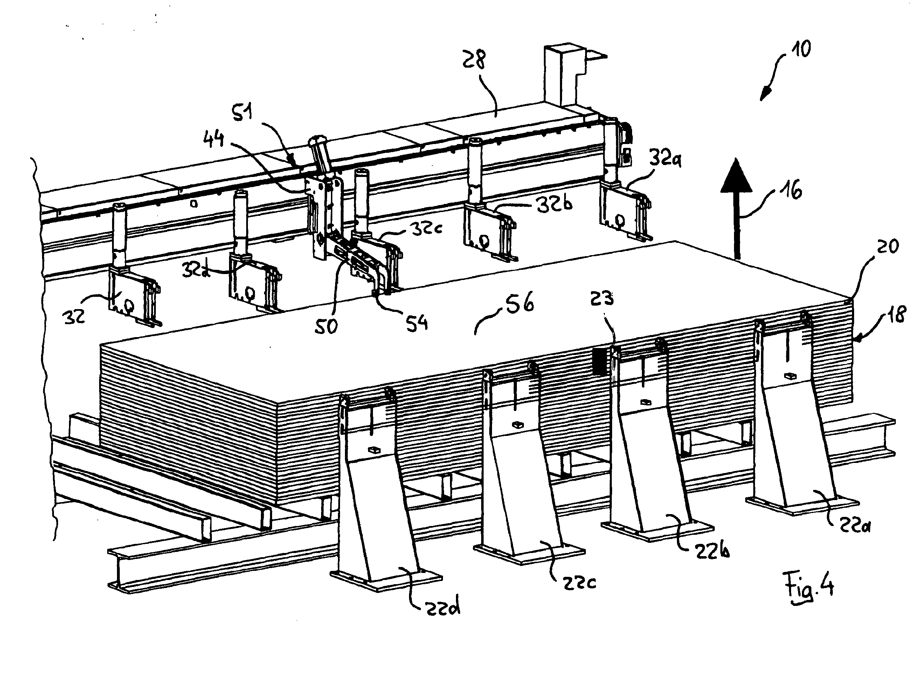

Nun wird der Hubtisch 12 entsprechend Pfeil 16 in Figur 4 angehoben. Dabei kommt der Tastbereich 54 des Messarms 50 in Anlage an die Oberseite 56 des obersten Werkstücks 20 des Stapels 18. Da die Winkellage des Messarms 50 gegenüber dem Schlitten 44 verriegelt ist, wird im weiteren Verlauf der Hubbewegung des Hubtisches 12 der Schlitten 44 entgegen der Kraft der Feder 48 (nur in Figur 1 sichtbar) relativ zum Programmschieberwagen 28 nach oben bewegt. Aufgrund der Kraft der Feder 48 wird der Stapel 18 im Bereich der Höhenmesseinrichtung 51 zumindest etwas zusammengedrückt, wodurch Welligkeiten des Stapels 18 reduziert werden. Die Vertikalposition des Schlittens 44 wird vom Sensor 60 (vergleiche Figur 1) laufend erfasst.

Von der oben erwähnten Steuer- und Regeleinrichtung wird laufend die Differenz zwischen der Höhe der Oberseite 56 des obersten Werkstücks 20, die von der Höhenmesseinrichtung 51 erfasst wird, mit einer von der Oberseite 23 der Gegenhalteeinrichtung 21 definierten Bezugshöhe verglichen. Ist hier ein von der Anzahl der abzuschiebenden Werkstücke 20 und von der Dicke eines Werkstücks 20 abhängiger Wert erreicht (Bezugszeichen 62 in Figur 1), wird der Hubtisch 12 angehalten.

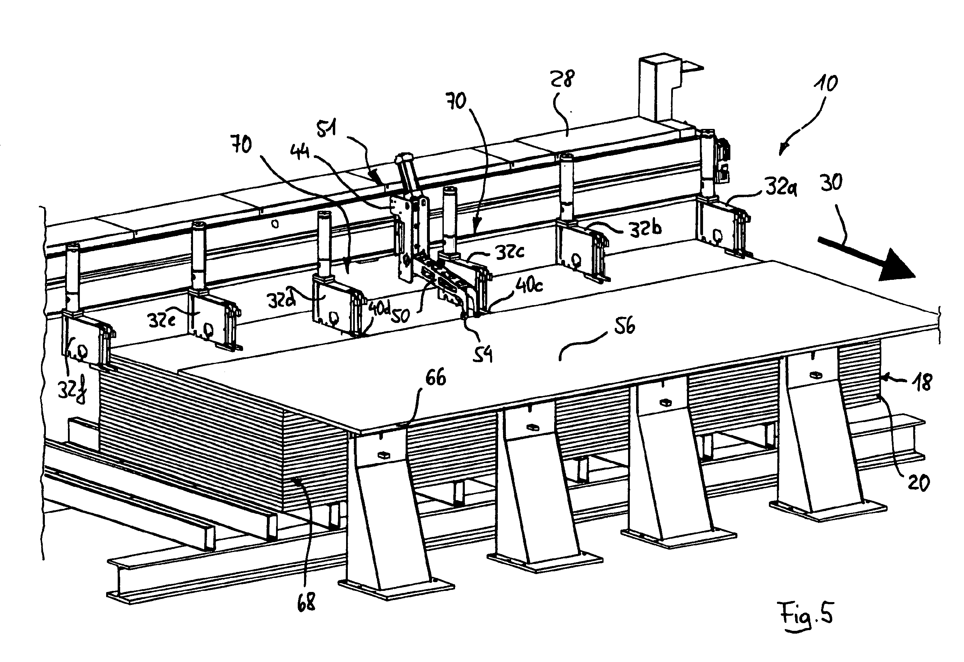

Wie aus Figur 5 hervorgeht, wird der Programmschieberwagen 28 nun in Richtung des Pfeils 30 bewegt, wodurch die unteren Finger 40c und 40d der beiden Spannzangen 32c und 32d in Anlage an das unterste Werkstück eines abzuschiebenden Teilstapels kommen. Dieser Teilstapel hat in Figur 1 die Höhe 64, und er trägt das Bezugszeichen 66. Der auf dem Hubtisch 12 verbleibende Reststapel trägt dort das Bezugszeichen 68. Dabei sei an dieser Stelle darauf hingewiesen, dass in den Figuren 5 bis 8 der an sich mehrere Werkstücke aufweisende abgeschobene Teilstapel 66 aus Übersichtlichkeitsgründen nur als ein einzelnes Werkstück dargestellt ist.

Im Verlauf der weiteren Vorschubbewegung des Programmschieberwagens 28 wird der Teilstapel 66 von den beiden Fingern 40c und 40d der Spannzangen 32c und 32d vom Reststapel 68 weggeschoben, welcher von den Gegenhaltern 22 der Gegenhalteeinrichtung 21 zurückgehalten wird. Insoweit sind die Finger 40c und 40d und die Spannzangen 32c und 32d Teil einer Abschiebeeinrichtung 70. Da die anderen Spannzangen 32a, b, e, f eine vertikal höhere Position aufweisen als die Spannzangen 32c und 32d, können diese auch bei welligem Stapel 18 die Oberseite des obersten Werkstücks 20 des Reststapels 68 nicht beschädigen.

In einem nicht dargestellten Ausführungsbeispiel ist die Höhe der Spannzangen 32a, b, e, f so eingestellt, dass diese zwar höher liegen als die Spannzangen 32c, d, sie jedoch nicht oberhalb der Oberseite 56 des obersten Werkstücks des Teilstapels 66 sind. Auf diese Weise wird das Abschieben des Teilstapels 66 von sämtlichen Spannzangen 32 bzw. deren Fingern 40 unterstützt. Bei einem weiteren nicht dargestellten Ausführungsbeispiel sind die oberen und unteren Finger gleich lang. Zum Abschieben eines Teilstapels werden alle Finger einer Spannzange verwendet, so dass man eine entsprechend größere Angriffsfläche erhält.

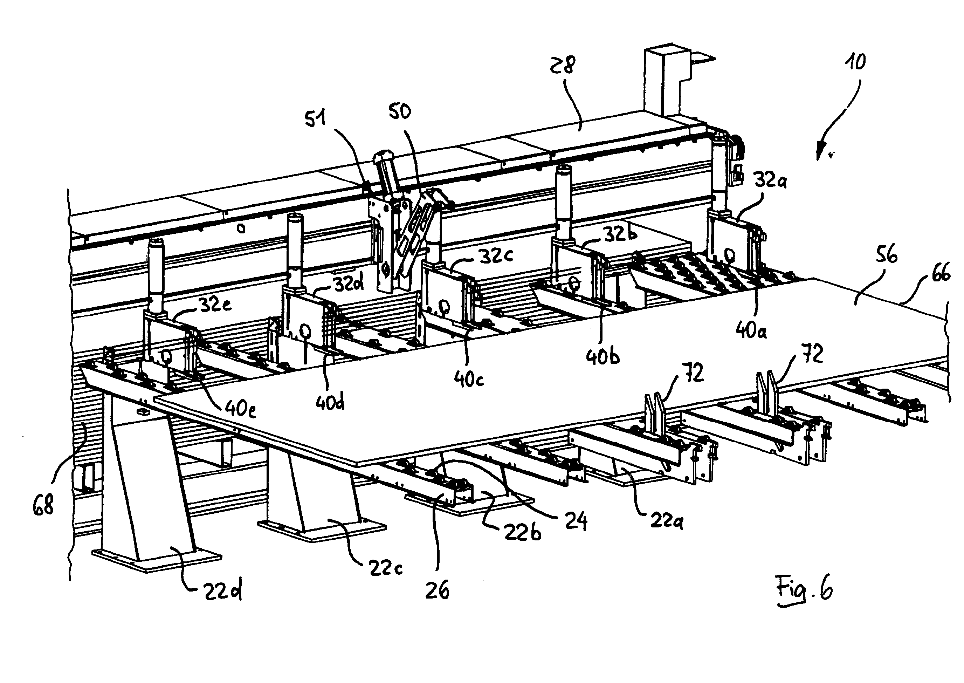

Sobald der Teilstapel 66 vollständig auf dem Fördertisch 26 liegt, stoppt der Programmschieberwagen 28, und der Messarm 50 der Höhenmesseinrichtung 51 wird wieder in seine Ruheposition geschwenkt (vergleiche Figur 6). Außerdem fährt der Programmschieberwagen 28 eine bestimmte Strecke zurück, um sicherzustellen, dass sich unterhalb der Spannzangen 32 keine Werkstücke 20 des abgeschobenen Teilstapels 66 befinden. Nun werden sämtliche Spannzangen 32 so abgesenkt, dass die Oberseite der unteren Finger 40 unter den abgeschobenen Teilstapel 66 greifen kann. Gleichzeitig werden, wie aus Figur 6 ersichtlich ist, am vom Hubtisch 12 abgewandten Ende des Fördertisches 26 Ausrichtanschläge 72 hochgeklappt.

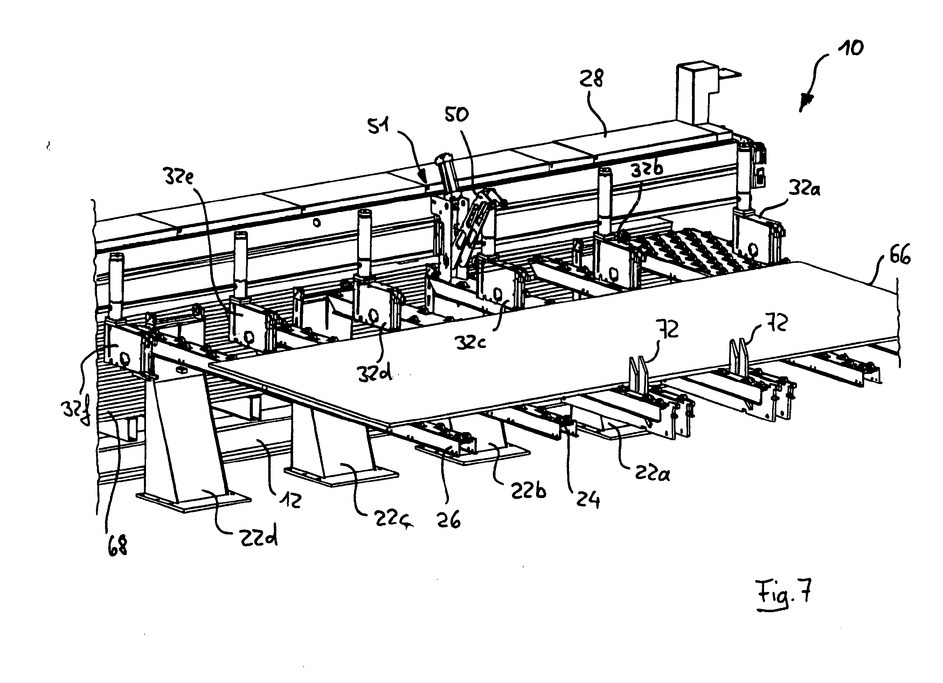

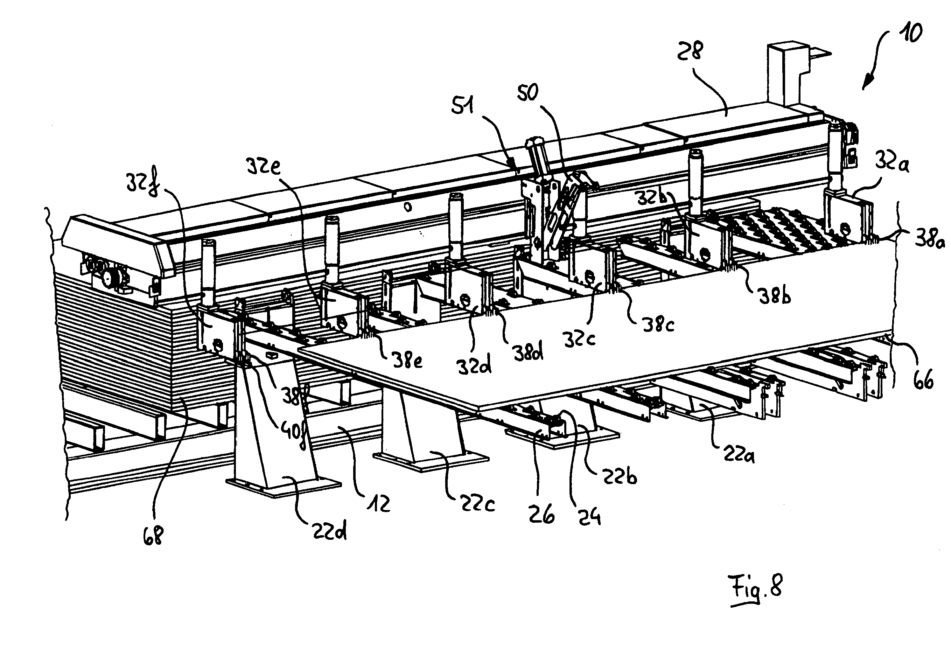

Mit einer weiteren Vorschubbewegung des Programmschieberwagens 28 wird nun der abgeschobene Teilstapel 66 gegen die beiden Ausrichtanschläge 72 geschoben, so dass die Vorderkante der einzelnen Werkstücke 20 des abgeschobenen Teilstapels 66 bündig ist. Dies ist in Figur 7 dargestellt. Nun werden, wie aus Figur 8 ersichtlich ist, die oberen Finger 38 der Spannzangen 32 nach unten bewegt und hierdurch die Hinterkante des abgeschobenen Teilstapels 66 zwischen den Fingern 38 und 40 geklemmt. Gleichzeitig wird der Ausrichtanschlag 72 wieder in seine Ruheposition geschwenkt, in der er unterhalb der Ebene des Fördertisches 26 liegt. Durch eine weitere Bewegung des Programmschieberwagens 28 kann dann der Teilstapel 66 der Säge zugeführt werden.

## Patentansprüche

1. Vorrichtung (10) zum Abschieben mindestens eines Teilstapels (66) mit mindestens einem plattenförmigen Werkstück (20) von einem Reststapel (68), mit einem höhenverstellbaren Hubtisch (12), mit einer auf einer Seite des Hubtisches (12) angeordneten Gegenhalteeinrichtung (21), und mit einer auf der anderen Seite des Hubtisches (12) angeordneten Abschiebeeinrichtung (70) zum Abschieben des Teilstapels (66) von dem von der Gegenhalteeinrichtung (21) zurück gehaltenen Reststapel (68), **dadurch gekennzeichnet, dass** die Abschiebeeinrichtung (70) mindestens ein Abschiebeelement in Form eines unteren Fingers (40) an einer Spannzange (32) umfasst, der beim Abschieben des Teilstapels vom Reststapel mit seinem abragenden Ende an dem Teilstapel (66) anliegt.

2. Vorrichtung (10) nach Anspruch 1 , **dadurch gekennzeichnet, dass** sie eine nahe bei der Abschiebeeinrichtung (70) angeordnete Höhenmesseinrichtung (51) aufweist.

3. Vorrichtung (10) nach Anspruch 2, **dadurch gekennzeichnet, dass** die Höhenmesseinrichtung (51) einen aus einer Ruheposition in eine Messposition beweg-, vorzugsweise verschwenkbaren Messarm (50) umfasst.

4. Vorrichtung (10) nach Anspruch 3, **dadurch gekennzeichnet, dass** der Messarm (50) an einem höhenverstellbaren Schlitten (44) angebracht und der Messarm (50) in der Messposition gegenüber dem Schlitten (44) verriegelbar ist.

5. Vorrichtung (10) nach einem der Ansprüche 2 bis 4, **dadurch gekennzeichnet, dass** die Höhenmesseinrichtung (51) eine Beaufschlagungseinrichtung (48) umfasst, welche einen auf die Oberseite (56) des obersten Werkstücks (20) abgesenkten Tastbereich (54) des Messarms (50) mit einer gewünschten Kraft auf das Werkstück (20) drückt.

6. Vorrichtung (10) nach Anspruch 5, **dadurch gekennzeichnet, dass** die Beaufschlagungseinrichtung eine Feder (48) und/oder eine Gewichtsmasse umfasst.

7. Vorrichtung (10) nach Anspruch 5 oder 6, **dadurch gekennzeichnet, dass** der Tastbereich mindestens eine Rolle (54) umfasst.

8. Vorrichtung (10) nach einem der Ansprüche 2 bis 7, **dadurch gekennzeichnet, dass** die Höhenmesseinrichtung (51) wenigstens in etwa mittig zwischen zwei Spannzangen (32c, 32d) angeordnet ist, die Teil der Abschiebeeinrichtung (70) sind.

9. Vorrichtung nach einem der vorhergehenden Ansprüche, **dadurch gekennzeichnet, dass** auf der Unterseite eines Abschiebeelements mindestens eine Rolle vorhanden ist.

10. Verfahren zum Betreiben einer Vorrichtung (10) nach einem der Ansprüche 2 bis 9, **dadurch gekennzeichnet, dass** es folgende Schritte umfasst:
a. In Kontakt Bringen des Tastbereichs (54) der Höhenmesseinrichtung (51) mit der Oberseite (56) des obersten Werkstücks (20);
b. Einstellen der Abschiebeeinrichtung (70) auf eine Höhe knapp oberhalb der Höhe der Gegenhalteeinrichtung (21);
c. Anheben des Hubtisches (12) ;
d. Anhalten des Hubtisches (12), wenn die Differenz (62) zwischen der Höhe des Tastbereichs (54) und einer Bezugshöhe, die von der Höhe der Gegenhalteeinrichtung (21) abhängt, einen gewünschten, von der Anzahl der abzuschiebenden Werkstücke (20) abhängigen Wert erreicht;
e. Abschieben eines Teilstapels (66), indem die Abschiebeeinrichtung (70), die mindestens ein Abschiebeelement in Form eines unteren Fingers (40) an einer Spannzange (32) umfasst, mit dem abragenden Ende des Fingers (40) an den Teilstapel (66) in Anlage gebracht wird.

11. Verfahren nach Anspruch 10, **dadurch gekennzeichnet, dass** die mindestens eine zu der Abschiebeeinrichtung (70) gehörende Spannzange (32c, 32d) vor dem Abschiebevorgang in der Höhe so eingestellt wird, dass die Unterseite des unteren Fingers (40c, 40d) der Spannzange (32c, 32d) von der Oberseite des Reststapels (68), vorzugsweise etwa um eine halbe Werkstückdicke, beabstandet ist.

12. Verfahren nach Anspruch 11, **dadurch gekennzeichnet, dass** es zusätzlich folgende Schritte umfasst:
a. die Abschiebeeinrichtung (70) fährt eine bestimmte Strecke zurück, wenn der Teilstapel (66) vom Reststapel (68) abgeschoben ist;
b. mindestens die im Breitenbereich des Teilstapels (66) liegenden Spannzangen (32a-f) werden dann auf die Bezugshöhe abgesenkt.

13. Verfahren nach einem der Ansprüche 10 bis 12, **dadurch gekennzeichnet, dass** zum Abschieben die Abschiebeeinrichtungen mehrerer Spannzangen in unterschiedlicher Höhe am Teilstapel angreifen.

14. Verfahren nach einem der Ansprüche 10 bis 13, **dadurch gekennzeichnet, dass** beim Abschieben Gegenhalter (22) der Gegenhalteeinrichtung (21) eine leicht unterschiedliche Höhe aufweisen.

## Claims

1. An apparatus (10) for pushing at least one substack (66) off a remaining stack (68) by means of at least one platelike workpiece (20), having an adjustable-height lifting platform (12), having a steadying device (21) disposed on one side of the lifting platform (12), and having a pusher device (70), disposed on the other side of the lifting platform (12), for pushing the substack (66) off the remaining stack (68) that is held back by the steadying device (21), **characterized in that** the pusher device (70) includes at least one pusher element in the form of a lower prong (40) on a collet chuck (32), which prong, on pushing the substack off the remaining stack, rests with its protruding end on the substack (66).

2. The apparatus (10) of claim 1, **characterized in that** it has a height-measuring device (51) disposed close to the pusher device (70).

3. The apparatus (10) of claim 2, **characterized in that** the height-measuring device (51) includes a measuring arm (50) that is movable, preferably pivotable, out of a position of repose into a measurement position.

4. The apparatus (10) of claim 3, **characterized in that** the measuring arm (50) is mounted on an adjustable-height slide (44), and the measuring arm (50) is lockable in the measurement position relative to the slide (44).

5. The apparatus (10) of one of claims 2-4, **characterized in that** the height-measuring device (51) includes an impingement device (48), which presses a feeler region (54) of the measuring arm (50), which region has been lowered onto the top (56) of the uppermost workpiece (20), onto the workpiece (20) with a desired force.

6. The apparatus (10) of claim 5, **characterized in that** the impingement device includes a spring (48) and/or a weight.

7. The apparatus (10) of claim 5 or 6, **characterized in that** the feeler region includes at least one roller (54).

8. The apparatus (10) of one of claims 2-7, **characterized in that** the height-measuring device (51) is disposed approximately centrally between two collet chucks (32c, 32d), which are part of the pusher device (70).

9. The apparatus of one of the foregoing claims, **characterized in that** there is at least one roller on the underside of a pusher element.

10. A method for operating an apparatus (10) of one of claims 2-9, **characterized in that** it includes the following steps:
a. putting the feeler region (54) of the height-measuring device (51) into contact with the top (56) of the uppermost workpiece (20);
b. adjusting the pusher device (70) to a height just above the height of the steadying device (21);
c. raising the lifting platform (12);
d. stopping the lifting platform (12) when the difference (62) between the height of the feeler region (54) and a reference height, which depends on the height of the steadying device (21), reaches a desired value that is dependent on the number of workpieces (20) to be pushed off;
e. pushing off a substack (66), **in that** the pusher device (70), which includes at least one pusher element in the form of a lower prong (40) on a collet chuck (32), is brought with the protruding end of the prong (40) into contact with the substack (66).

11. The method of claim 10, **characterized in that** before the pushing operation, the at least one collet chuck (32c, 32d) belonging to the pusher device (70) is adjusted in height such that the underside of the lower prong (40c, 40d) of the collet chuck (32c, 32d) is spaced apart from the top of the remaining stack (68), preferably by approximately half the thickness of a workpiece.

12. The method of claim 11, **characterized in that** it additionally includes the following steps:
a. the pusher device (70) travels backward by a certain distance once the substack (66) has been pushed off the remaining stack (68);
b. at least the collet chucks (32a-f) located in the widthwise region of the substack (66) are then lowered to the reference height.

13. The method of one of claims 10-12, **characterized in that** for the pushing operation, the pusher devices of a plurality of collet chucks engage the substack at different heights.

14. The method of one of claims 10-13, **characterized in that** in the pushing operation, steadiers (22) of the steadying device (21) have slightly different heights.

## Revendications

1. Dispositif (10) destiné à faire glisser au moins une partie (66) d'une pile contenant au moins une pièce (10) en forme de plaque du reste (68) de la pile, comprenant une table élévatrice (12) réglable en hauteur, comprenant un dispositif de contre-appui (21) agencé sur une face de la table élévatrice (12), et comprenant un dispositif d'évacuation par glissement (70) agencé sur l'autre face de la table élévatrice (12) et destiné à faire glisser une partie (66) d'une pile du reste (68) de la pile retenu par le dispositif de contre-appui (21), **caractérisé en ce que** le dispositif d'évacuation par glissement (70) comporte un élément d'évacuation par glissement constitué par un doigt inférieur (40) sur une pince de serrage (32) dont l'extrémité faisant saillie repose sur la partie (66) de la pile lorsqu'une partie de la pile est évacuée du reste de la pile en glissant.

2. Dispositif (10) selon la revendication 1, **caractérisé en ce qu'**il comprend un dispositif de mesure de la hauteur (51) agencé à proximité du dispositif d'évacuation par glissement (70).

3. Dispositif (10) selon la revendication 2, **caractérisé en ce que** le dispositif de mesure de la hauteur (51) comporte un bras de mesure (50) mobile, de préférence pivotant d'une position de repos dans une position de mesure.

4. Dispositif (10) selon la revendication 3, **caractérisé en ce que** le bras de mesure (50) est agencé sur un coulisseau (44) réglable en hauteur et le bras de mesure (50) peut être verrouillé dans la position de mesure par rapport au coulisseau (44).

5. Dispositif (10) selon l'une quelconque des revendications 2 à 4, **caractérisé en ce que** le dispositif de mesure de la hauteur (51) comporte un dispositif de sollicitation (48), lequel presse une zone de détection (54) du bras de mesure (50), abaissée sur la face supérieure (56) de la pièce (20) la plus haute, sur cette même pièce au moyen d'une force souhaitée.

6. Dispositif (10) selon la revendication 5, **caractérisé en ce que** le dispositif de sollicitation comporte un ressort (48') et/ou une masselotte.

7. Dispositif (10) selon la revendication 5 ou 6, **caractérisé en ce que** la zone de détection comporte au moins un rouleau (54).

8. Dispositif (10) selon l'une quelconque des revendications 2 à 7, **caractérisé en ce que** le dispositif de mesure de la hauteur (51) est agencé au moins à peu près au centre entre deux pinces de serrage (32c, 32d) qui font partie du dispositif d'évacuation par glissement (70).

9. Dispositif selon l'une quelconque des revendications précédentes, **caractérisé en ce qu'**au moins un rouleau est présent sur la face inférieure d'un élément d'évacuation par glissement.

10. Procédé permettant de faire fonctionner un dispositif (10) selon l'une quelconque des revendications 2 à 9, **caractérisé en ce qu'**il comporte les étapes suivantes consistant à :
a. amener en contact la zone de détection (54) du dispositif de mesure de la hauteur (51) avec la face supérieure (56) de la pièce la plus haute (20) ;
b. régler le dispositif d'évacuation par glissement (70) à une hauteur située presque au-dessus de la hauteur du dispositif de contre-appui (21) ;
c. soulever la table élévatrice (12) ;
d. arrêter la table élévatrice (12), lorsque la différence (62) entre la hauteur de la zone de détection (54) et une hauteur de référence, qui dépend de la hauteur du dispositif de contre-appui (21), atteint une valeur souhaitée dépendant du nombre des pièces (20) à évacuer par glissement ;
e. évacuer par glissement une partie (66) de la pile, par le fait que le dispositif d'évacuation par glissement (70), qui comporte au moins un élément d'évacuation par glissement, constitué d'un doigt inférieur (40), sur une pince de serrage (32), est amené en appui sur la partie (66) de la pile par l'extrémité en saillie du doigt (40).

11. Procédé selon la revendication 10, **caractérisé en ce que** la ou les pinces de serrage (32c, 32d) tournant par rapport au dispositif d'évacuation par glissement (70) sont réglées en hauteur avant la procédure d'évacuation par glissement, de telle sorte que la face inférieure du doigt inférieur (40c, 40d) de la pince de serrage (32c, 32d) est espacée de la face supérieure du reste (68) de la pile, de préférence sensiblement d'une moitié de l'épaisseur de la pièce.

12. Procédé selon la revendication 11, **caractérisé en ce qu'**il comporte en plus les étapes suivantes :
a. le dispositif d'évacuation par glissement (70) effectue un parcours de retour prédéfini lorsque la partie (66) de la pile est évacuée du reste (68) de la pile par glissement ;
b. au moins les pinces de serrage (32a-f) situées dans la zone de largeur de la partie (66) de la pile sont alors abaissées à la hauteur de référence.

13. Procédé selon l'une quelconque des revendications 10 à 12, **caractérisé en ce que** pour effectuer l'évacuation par glissement, les dispositifs d'évacuation par glissement de plusieurs pinces de serrage agissent sur la partie de la pile à différentes hauteurs.

14. Procédé selon l'une quelconque des revendications 10 à 13, **caractérisé en ce que** lors de l'évacuation par glissement, des éléments de contre-appui (22) du dispositif de contre-appui (21) présentent une hauteur légèrement différente.
